# EUROPEAN PATENT SPECIFICATION

(11) **EP 0 882 388 B1**
(45) Date of publication and mention of the grant of the patent: **23.01.2002**
(21) Application number: 98201750.1
(22) Date of filing: 26.05.1998
(51) Int. Cl.: A01D 41/12, B60R 3/02

(54) **Combine ladder with breakaway pivot.**
Mähdrescherleiter mit Schwenkgelenkzapfen
Echelle pour moissonneuse-batteuse à pivot à dégagement

(30) Priority: 27.05.1997 US 47806
(43) Date of publication of application: 09.12.1998
(73) Proprietor: NEW HOLLAND BELGIUM N.V., B-8210 Zedelgem (BE)
(72) Inventor: Smith, Eric B., Independence IA 50644 (US)
(74) Representative: Vandenbroucke, Alberic

(56) References cited:
- SU-A- 852 226
- US-A- 2 653 036
- US-A- 3 232 376
- US-A- 3 508 627
- US-A- 4 245 716
- US-A- 5 335 752

## Description

This invention relates to the improvement of an agricultural vehicle, such as a combine or a forage harvester. More specifically it relates to an improvement of the mounting structure for a ladder.

Mechanical harvesting of grain has taken place for decades. However, efforts continue in the attempt to make harvesting operations more efficient and effective. A combine harvester generally includes a header which cuts the crop. The header then moves the cut crop into a feeder house, which lifts the cut crop into the threshing and separation areas of the combine. The grain is separated from the stalk by a rotor or threshing system. The grain is then moved and stored in a grain tank. Chaff and trash are deposited from the rear of the combine. An operator usually runs these various operations from a glass-enclosed cab. Typically, the cab is located above and behind the header. There is a ladder extending from ground level to the cab deck for enabling the operator to reach the cab. It is advantageous that the ladder can be moved to a variety of positions. For example, when the combine is being driven from one location to another, the ladder needs to be moved so as to limit the width of the entire combine. Some designs rotate the entire ladder onto the deck. Other designs rotate the ladder to the front of the front wheel. Besides being necessary to change the ladder's position for transport, the combine ladder can inadvertently contact the crop or similar obstruction while being used in farming operations. To limit these occurrences it is necessary for the ladder to rotate into a horizontal position. However a design which would allow the operator in the cab or an individual located on the ground to easily move or re-engage the ladder has not yet been fully developed. The attempt to design an adequate combine ladder has taken several approaches. Some designs use shear bolts which break when a force impacts the ladder. When the shear bolt is broken, the ladder can rotate freely, making it awkward for the driver to exit the cab and safely reach the ground. Some designs incorporate a ladder with a flexible base which deforms when contacted by a large force. However, these designs are not always feasible in hilly terrain or marshy conditions where the combine axles are low. In such environment the ladder would be constantly impacted.

The prior art illustrates these and other drawbacks. US-A-2,967,584 discloses a ladder for agricultural vehicle. The ladder may be moved to a horizontal position. However, the operator must partially descend the ladder to re-engage the ladder. Also, the handle is difficult to engage from the ground. Finally, the ladder must be moved before contacting the ground.

US-A-3,190,392 discloses a folding ladder for combines. Again, the ladder is difficult to adjust from the ground and no provision has been made if the ladder contacts the ground during operations.

US-A-3,508,627 discloses a combine ladder. Herein the entire ladder is lifted onto the cab deck.

US-A-3,656,578 discloses a vehicle access ladder. The ladder is pivoted and lifted to a horizontal position on the deck.

US-A-4,245,716 discloses a vehicle access ladder which has a spring mechanism to lift the ladder onto the deck. The main drawback of this approach resides in the use of the springs in the ladder mechanism. The connection between the ladder and deck vibrates while the combine is operated. This creates a 'sense' that the ladder is not secured to the combine. This vibration phenomenon is further illustrated in US-A-5,335,752.

Finally, US-A-3,232,376 illustrates an access ladder for combines. This patent discloses shifting the ladder into a transport position. Placing a combine ladder to a forward, transport position is desirable when it is necessary to limit the width of the entire combine. This situation occurs when it is necessary to transport the combine on a public roadway. While this design is acceptable when moving the combine from field to field, problems develop when the terrain changes. For instance, when the axle of the combine sinks or is in hilly terrain, the ladder can be damaged by impacting crop.

Consequently, the need exists for an agricultural vehicle having a ladder which can be stowed in a transport position, can be left in a vertical position and which can move when impacted by a force.

According to the invention there is provided an agricultural vehicle comprising:
a deck, having a deck frame;
a ladder for allowing access to the deck when in its vertical position, said ladder having a ladder head at its top end;
a mounting structure for attaching said ladder head to said frame, said mounting structure comprising a pivot means including a ladder pivot pivotally affixed to said ladder head for allowing pivotment of said ladder about a substantially horizontal axis,
characterized in that said pivot means further includes a transport pivot pivotally affixed to said frame for allowing pivotment of said ladder about a substantially vertical axis.

This mounting structure enables orientation of the ladder in a variety of positions.

Advantageously the structure may comprise a breakaway mechanism allowing movement of the ladder when a force is exerted upon said ladder, e.g. it hits the ground or an object thereupon. The mechanism also allows the ladder to be re-engaged after the impact.

A handle may be used for over-riding the breakaway mechanism.

The mechanism may comprise a detent plate for controlling the motion of the ladder. The detent plate advantageously has several types of notches located along its circumference. The notches fix the ladder orientation so vibrations will not cause the hub to release from the detent and allow the ladder to move towards a vertical position. A detent plate with a vertical, an intermediate and a horizontal notch allows the ladder to be positioned vertically, horizontally and in an intermediate position. The notches may have a varying size and shape.

The breakaway mechanism may comprise a breakaway pivot having a breakaway housing having a vertically oriented, rectangular rod with a hub affixed for insertion into a notch. Furthermore, if a force impacts the ladder, a spring allows the hub to move away from the detent plate, allowing the ladder to rotate. The vertical notch may have a sloped wall allowing the ladder to rotate more easily rotate when impacted by an appropriate force. The horizontal and intermediate notches preferably have a straight wall which allows the ladder to remain in position unless an operator is exerting a slight force upon the handle. Also, the vertical notch may be slightly smaller than the hub so as to limit any vibration or wobble while the ladder is being climbed.

Advantageously, the ladder mounting structure comprises a bolt adjustment means for moving the ladder into the transport position.

The handle can also be used to adjust a bolt in a transport plate allowing the ladder to rotate about the transport pivot to a forward, transport position. The mechanism may comprise a transport lever and housing lever controlled by the handle The housing lever and handle lever only contact each other when the handle is engaged to over-ride the breakaway mechanism. This permits a single handle to adjust the orientation of the ladder and to move the ladder into the transport position. Furthermore, an operator can manipulate the ladder from the ground by grasping the lower portion of the handle which is located beneath the cab deck. The handle also reaches to the top surface of the deck for foot activation from the deck.

An embodiment of the present invention will now be described in greater detail, with reference to the following drawings, wherein:
Figure 1 is a general view of an agricultural combine having an operator's platform and a ladder;
Figure 2 is a side perspective view of the mounting of the ladder of Figure 1;
Figure 3 is a rear view of the ladder mounting of Figure 2;
Figure 4 is a front view of the ladder mounting of Figure 2;
Figure 5 is a perspective view of the mounting with the ladder, detent plate, frame and bolt adjustment means removed;

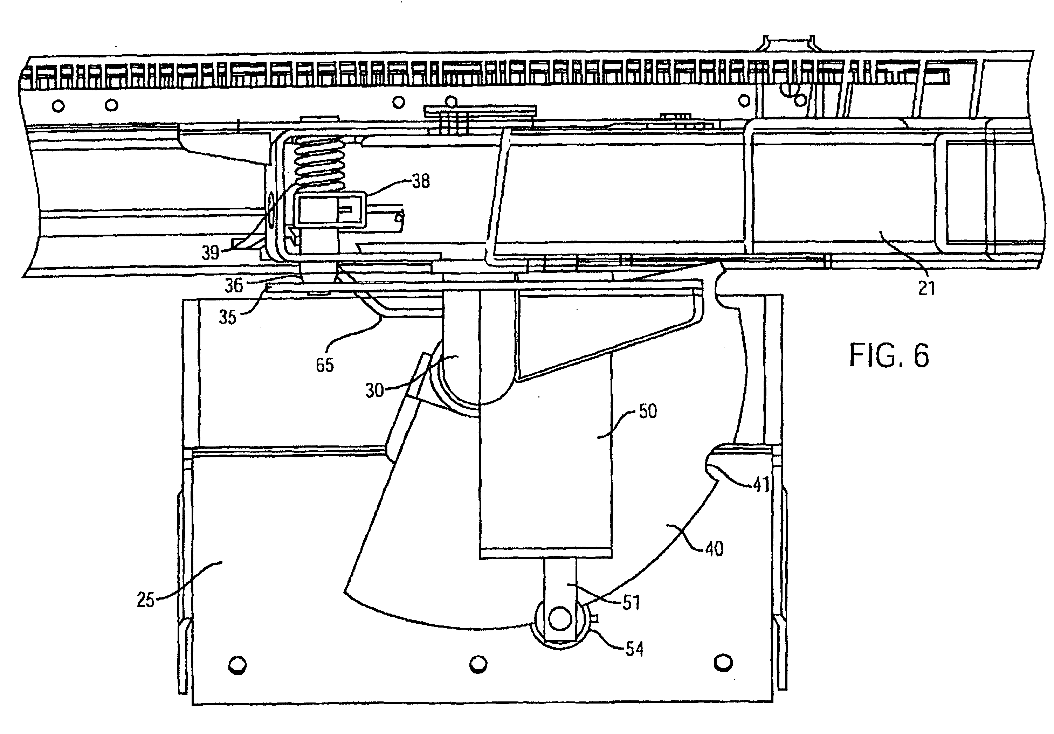

Figure 6 is a view of the mounting from the interior of the combine;

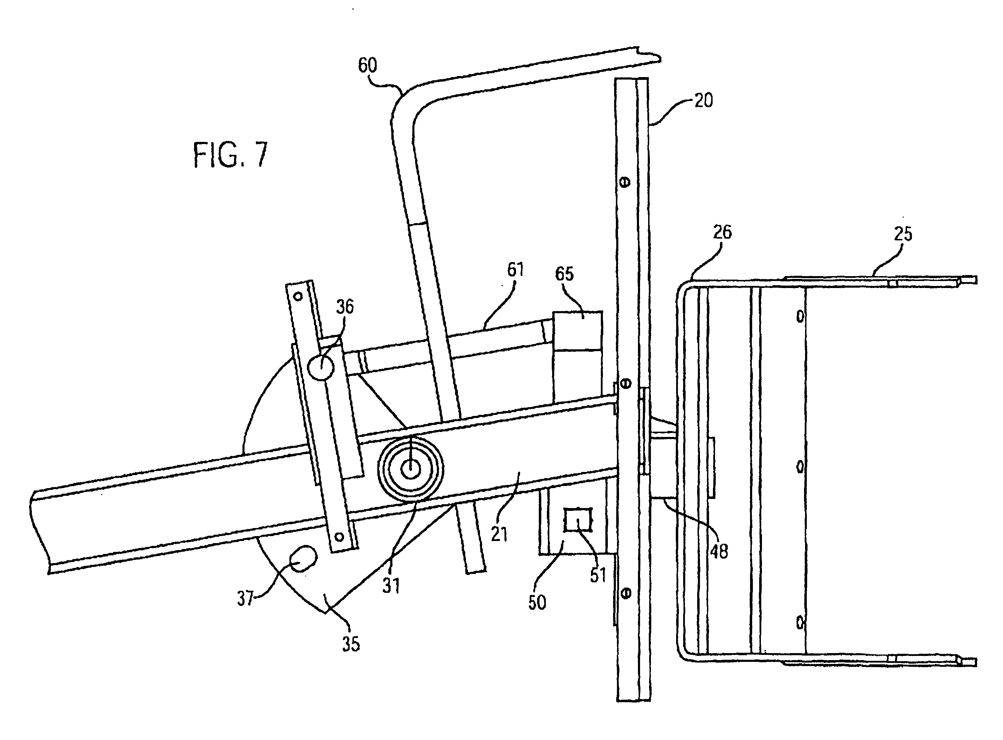

Figure 7 is an overhead view of the ladder mounting;
Figure 8 is a side perspective view with the ladder in the horizontal position;

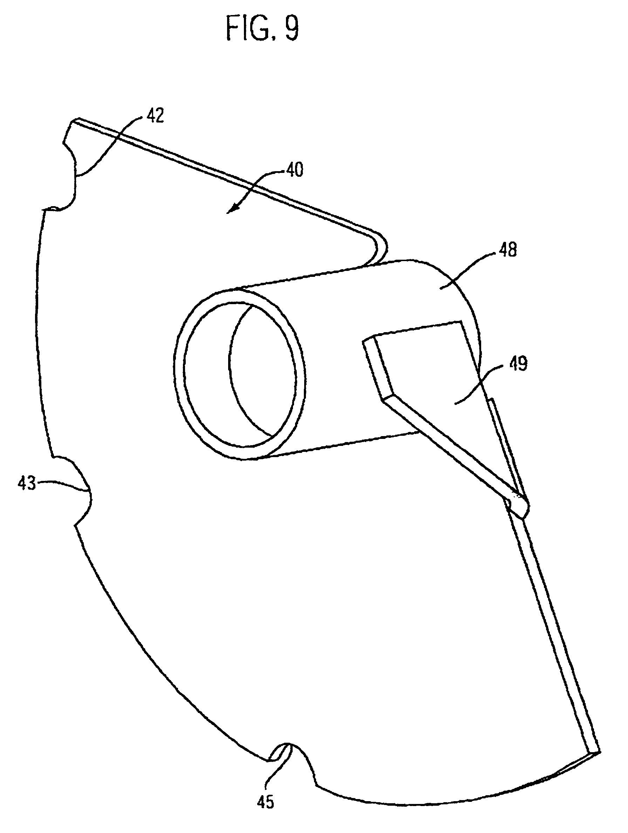

Figure 9 is a perspective view of the detent plate.
Figure 10 is a top view of the detent plate showing the shape of the notches; and
Figure 11 is a close-up side perspective view of the breakaway housing.

Referring to the drawings, it is possible to observe the major elements and general operation of the present invention. Left and right references are used as a matter of convenience and are determined by standing at the rear of the combine and facing the forward end in the normal direction of travel. Likewise, forward and rearward are determined by normal direction of travel of the combine. Upward or downward orientations are relative to the ground or operating surface. Horizontal or vertical planes are also relative to ground.

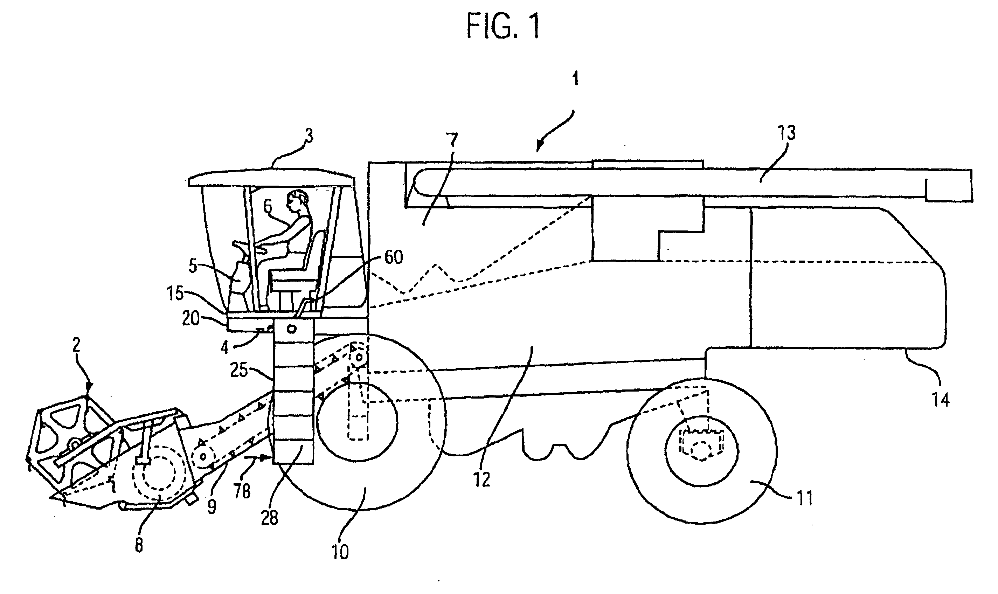

Figure 1 illustrates a conventional combine 1 with a header 2 for cutting a crop. As the combine 1 and header 2 are moved forward, the grain and stalk are cut by the header. The header moves the cut crop into an auger trough. A transverse auger 8 pushes the grain and stalk in the auger trough to the center of the header 8. Registering with the center of the header is the feeder house 9 or elevator. The feeder house 9 moves the grain and stalks rearward into the threshing and separation systems 12 of the combine. After processing and separation, the processed grain is stored in a grain tank 7 located near the top of the combine. The grain is removed from the grain tank by an unloading auger 13. The trash or chaff is ejected from the rear 14 of the combine. The operator 6 runs the combine 1 from the cab 3 located behind the header 2 and at the front of the combine. The cab 3 is supported by a cab support 4. From the cab the operator can observe most of the various combine functions. The cab 3 usually has a large glass window or several windows which afford the operator 6 the maximum ability to monitor the header 2. Located in the center of the cab 3 is the steering column 5. Behind the steering column 5 is an operator's chair. To gain access to the cab 3, the operator climbs a ladder 25 attached to a deck 15 having a frame 21 and a deck edge 20. The ladder has several steps 28 between a ladder channel 27. The top of the ladder or ladder head 26 is attached to the deck. Ladder movement is controlled by a handle 60 protruding through the deck 15.

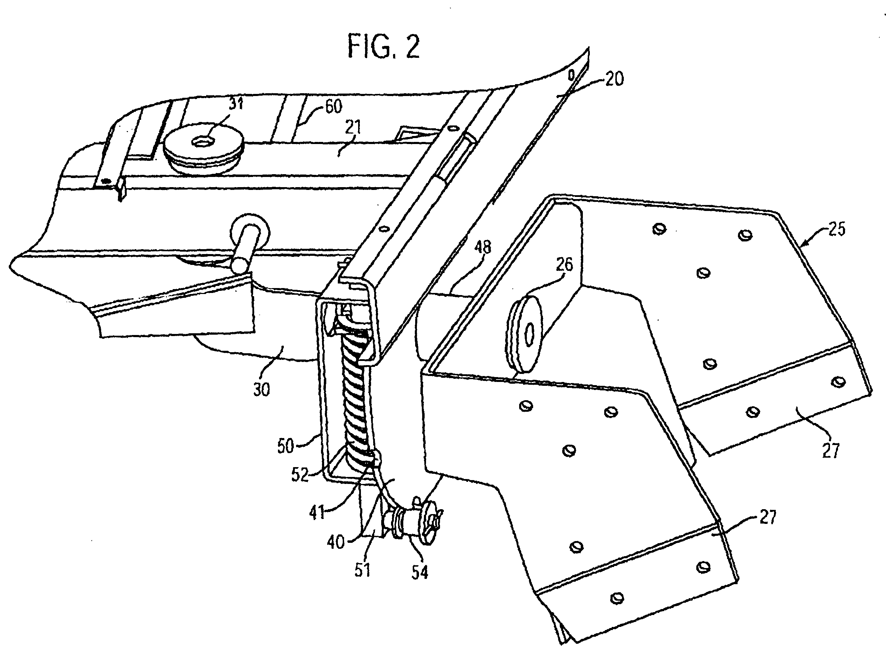

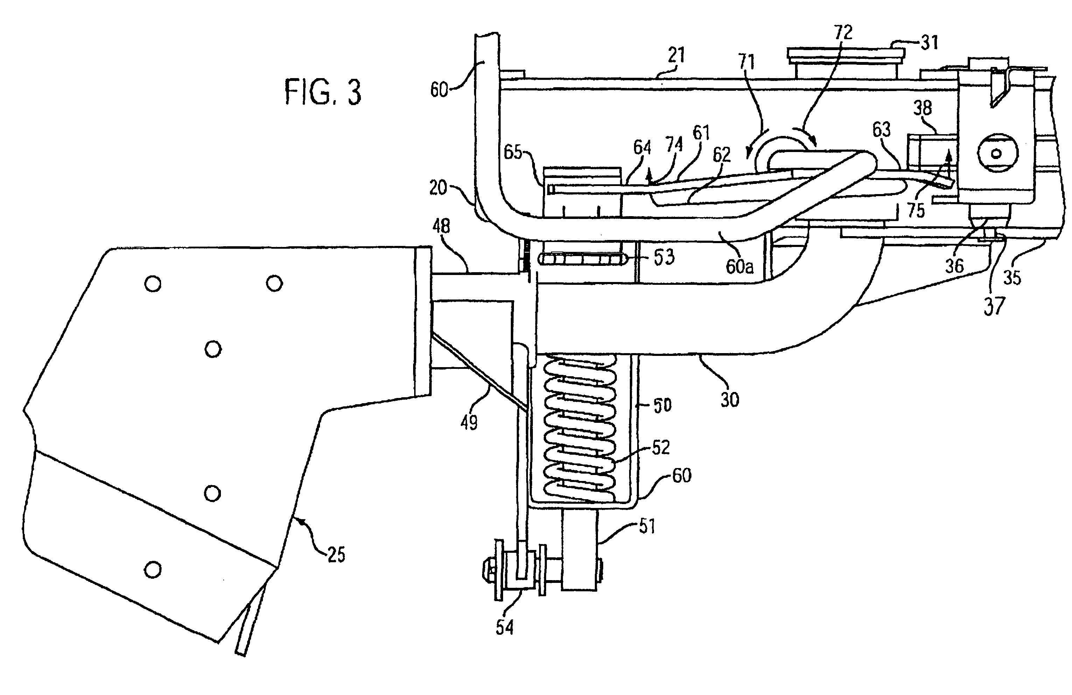

The ladder mounting structure is located near the ladder head 26, the deck 15 and the handle 60. A perspective view showing the general elements of the mounting structure can be seen in figure 2. It consists of a pivot 30 pivotally affixed to the deck frame 21. The pivot 30 has an up rights transport pivot 31 and a substantially horizontal ladder pivot 32. The ladder pivot 32 is attached to the ladder head 26. A detent plate 40 with several notches 41 is located near the ladder head 26. The breakaway housing 50 with a spring 52, rod 51 and a hub 54 interact with the detent plate 40 and may be over-ridden by the handle 60 in a manner which will be described later. As seen in Figure 3, the handle 60 controls a handle lever 61 and housing lever 65. The handle 60 also controls the bolt adjustment means 38 which controls a bolt 36 in the transport plate 35.

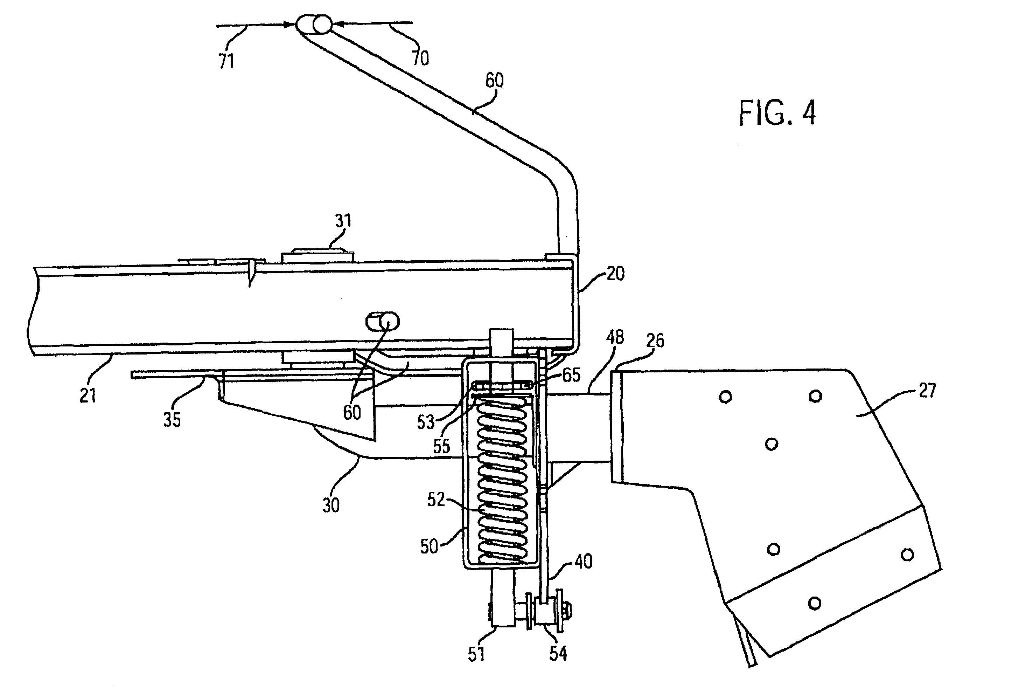

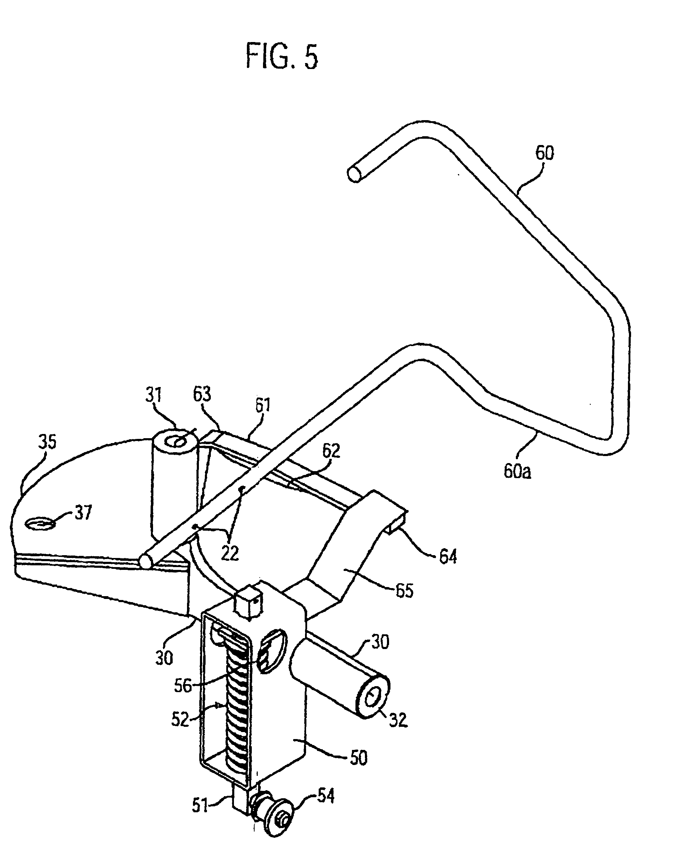

Now that the general elements have been reviewed a more in-depth discussion of the mounting structure is possible. The breakaway housing 50 is affixed to the pivot 30 and contains a spring 52 and a rectangular, vertically oriented rod 51 (Figure 4). The rod 51 is capable of vertical movement. Attached to the rod 51 is a clip 55. The spring 52 surrounds the rod 51 and is biased between the bottom of the housing 50 and the clip 55. Normally the spring 52 acts to force the rod 51 towards the top of the housing 50. Above the clip 55 and the spring 52 is the housing lever 65. A clip aperture 56 (Figure 5) is located in the housing 50 so as to be able to insert the clip 55 in the rod 51 during assembly. There is also a slot 53 (Figure. 3) for receiving the housing lever 65. The housing lever 65 pivots about the slot 53 and adjusts the rod 51 and spring 52. Attached to the base of the rod 51 is a circularly shaped hub 54.

The handle 60 consists of several elements and has portions located above and beneath the deck 15. The lower handle 60a is beneath the deck 15 within reach of an individual standing on the ground. The handle 60 is inserted into the deck frame 21 and can rotate forward (arrow 71) or rearward (arrow 72). The handle lever 61 is affixed perpendicularly to the handle 60 and has a bolt end 63 and a detent end 64. Providing the handle lever 61 with additional support is a gusset 62. The housing lever 65 is positioned above the detent end 64. The housing lever 65 extends from above the detent end 65, through the slot 53 and to the rod 51 within the breakaway housing 50. The handle 60 is positioned in the frame by several pins inserted into handle apertures 22 (Figure 5).

The pivot 30 is perpendicularly shaped with a transport pivot 31 in the deck frame 21. At the opposite end of the pivot 30, the ladder pivot 32 is rotationally affixed to the ladder head 26. Affixed to the ladder head 26 and surrounding the pivot 30 is an outer pivot 48, which is co-axial with a portion of the pivot 30 as can be seen in Figure 3. The outer pivot 48 is affixed at one end to the ladder head 26 and rotates about the ladder pivot 32. The detent plate 40 is affixed to the other end of the outer pivot 48. A triangularly shaped support 49 also interconnects the detent plate 40 and the outer pivot 48. This support 49 provides rigidity between the detent plate 40 and the outer pivot 48 and acts as a guide for positioning the ladder head 26 during assembly of the ladder mounting structure. The detent plate 40 is approximately shaped as a circle sector and has several notches 41 positioned on its circumference. The hub 54 is inserted into one of the notches 41 or moves along the circumference depending on the position of the ladder head 26.

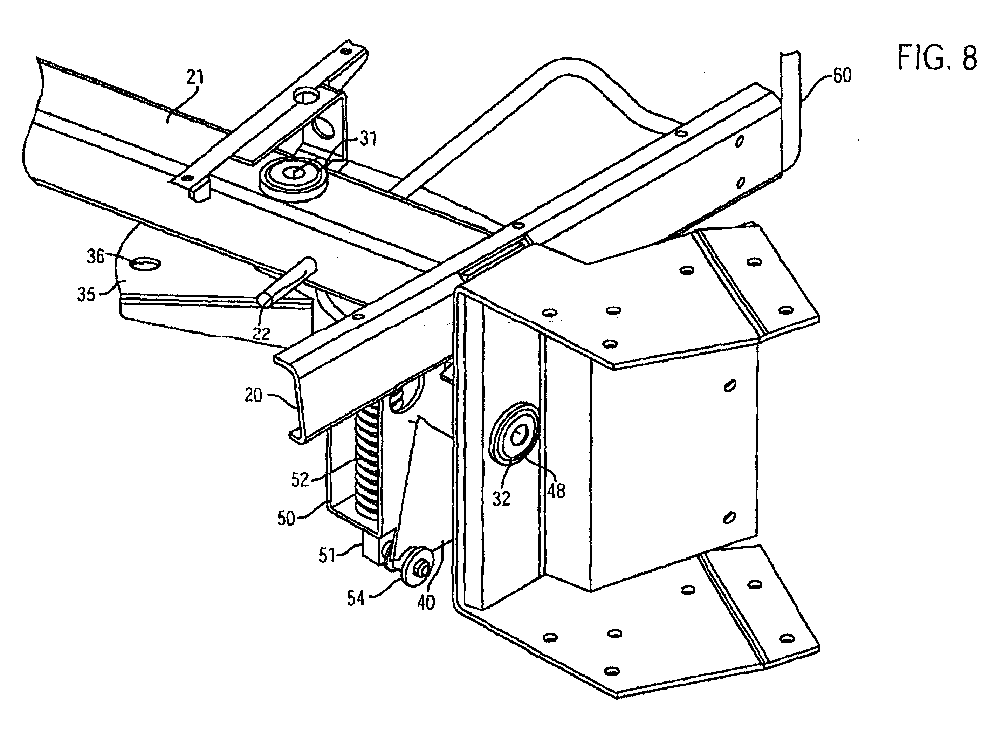

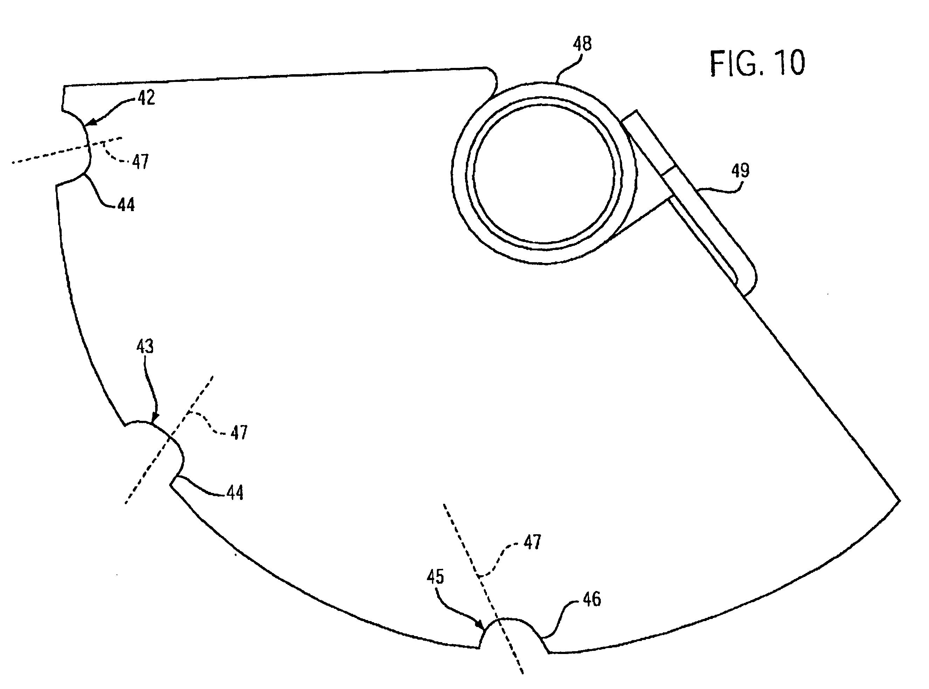

Figure 10 shows the detent plate 40 in greater detail. In the preferred embodiment, there are three notches in the plate 40: a horizontal notch 42, an intermediate notch 43 and a vertical notch 45. When the hub 54 is engaged or inserted into the vertical notch 45, the ladder 25 is positioned in a vertical position as shown in Figure 1. When the hub 54 is engaged in the horizontal notch 42, the ladder 25 is positioned in a horizontal position as seen in Figure 8. An intermediate notch 43 is provided to position the ladder in a position between the vertical or horizontal. The shape of the notch varies depending on the desired location of the ladder. The horizontal notch 42 and intermediate notch 43 are identical in shape. Both notches have a straight wall 44 which the hub 54 can engage. However, the vertical notch 45 has a wall 46 which is sloped with respect to the line 47 which is parallel to the rod 51 when the hub 54 is engaged with the vertical notch 45. This sloped wall 46 allows the hub to move out of the notch more easily than if the wall were straight (as is the case with the horizontal and intermediate notches 42, 43). This is desirable so as to allow the ladder 25 to breakaway from the vertical position when a sufficient force 78 impacts the ladder. The sloped wall 46 and the spring 52 (within the breakaway housing) allow for the ladder 25 to rotate about the ladder pivot 32 at a predetermined force. The ladder can rotate and engage the horizontal notch 42 or the intermediate notch 43. Likewise, the ladder can re-engage the vertical notch 45 after the force 28 ceases. If the intermediate notch 43 or horizontal notch 42 are engaged by the hub 54, the ladder will remain in these respective positions until the operator over-rides the hub by rotating the handle 60. The straight wall 44 normally prevents the hub from exiting these notches 42, 43. A slight upward pull by the operator on the deck 15 while engaging the handle will help the hub 54 exit these notches, but this is not necessary. Another difference between the horizontal and vertical notches is the size of the notch. The vertical notch 45 has a radius which is smaller than the radius of the hub 54. The smaller size results in the hub 54 being tightly wedged into the vertical notch 45. This ensures a tight fit preventing any movement or wobble when the ladder is in the vertical position.

As previously mentioned, the bolt end 63 engages a bolt adjustment means 38 shown in Figure 3. The bolt adjustment means comprises a bolt 36 biased by a spring into a bolt hole 37 in the transport plate 35. The bolt end 63 acts to lift the bolt adjustment means 38 which is connected to the bolt 36, such that this bolt 36 is lifted from the transport plate 35. When the bolt 36 is lifted from the transport plate, the pivot 30 can rotate about the transport pivot 31. The ladder 25 can then be moved to the front of the combine wheel 10. This is referred to as the transport position. This location is illustrated in US-A-3,232,376. The present structure is advantageous because it permits the use of a single handle 60 to control the movement of the ladder to a transport position, a vertical, a horizontal or an intermediate position. Furthermore, because the lower handle 60a is located beneath the deck, it can be manipulated by an operator on the ground. The lower handle 60a is also located to the outside of the combine and not between the combine 1 and the ladder 25 in the transport position.

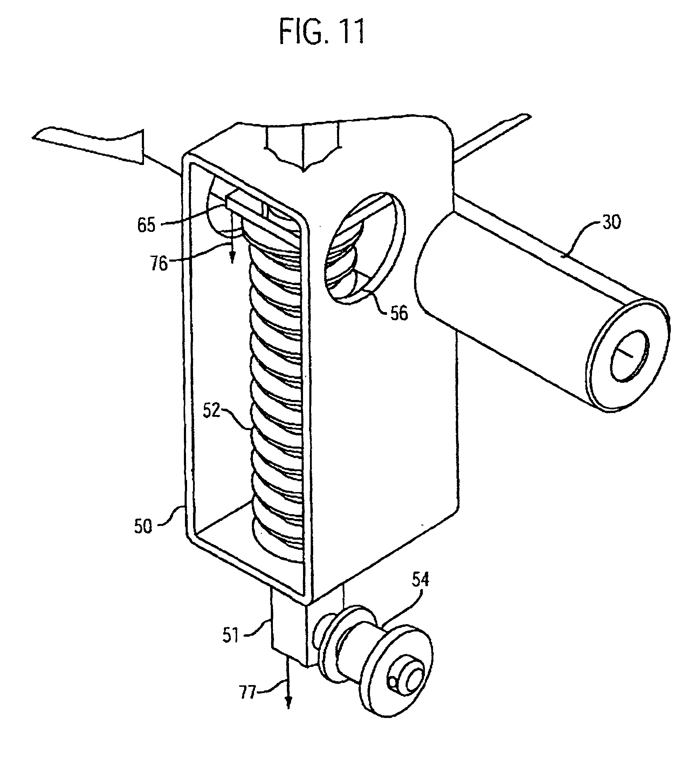

To change the position of the ladder 25, the handle 60 is depressed (arrow 70) by the operator. By standing on the deck 15 and depressing the handle, the detent end 64 of the handle lever 61 is raised and contacts the housing lever 65. The housing lever 65 pivots within the slot 53 pushing the rod 51 downwards (arrow 76 in Figure 11). The rod 51 moves downward (arrow 77) moving the hub 54 away from the detent plate 40. This allows the detent plate 40, the outer pivot 48 and the affixed ladder head 26 to rotate about the ladder pivot 32. Likewise, if the ladder is in a vertical position and a force 78 contacts the ladder (Figure 1), the design of the vertical notch 45 and the spring 52 will enable the hub 54 to exit the vertical notch allowing the ladder 25 to rotate. Finally, if the ladder 25 needs to be moved in front of the combine wheel 10 for transport, the handle 60 is pulled (arrow 71). This actuates the bolt adjustment means 38 permitting the bolt 36 to be lifted from the transport plate 35. The ladder 25 may then be rotated about the transport pivot 31 to the transport position. It should be noted that the detent end 64 and the housing lever 65 are not connected except when the proper force in direction 70 is exerted on the handle. This separation enables the use of handle 60 for moving the ladder 25 to the transport position and over-riding the breakaway mechanism.

It will be obvious to those skilled in the art that various changes may be made without departing from the scope of the invention and the invention is not to be considered limited to what is illustrated in the drawings and described in the specification. For example, the ladder mounting structure may also be used on other agricultural vehicles equipped with an elevated operator's platform and a movable ladder, such as forage harvesters or spraying machines.

## Claims

1. An agricultural vehicle comprising:
a deck (15), having a deck frame (21);
a ladder (25) for allowing access to the deck (15) when in its vertical position, said ladder (25) having a ladder head (26) at its top end;
a mounting structure for attaching said ladder head (26) to said frame (21), said mounting structure comprising a pivot means (30) including a ladder pivot (32) pivotally affixed to said ladder head (26) for allowing pivotment of said ladder (25) about a substantially horizontal axis,
**characterized in that** said pivot means (30) further includes a transport pivot (31) pivotally affixed to said frame (21) for allowing pivotment of said ladder (25) about a substantially vertical axis.

2. An agricultural vehicle according to claim 1, **characterized in that** said transport pivot (31) and said ladder pivot (32) are incorporated into one single pivot member (30).

3. An agricultural vehicle according to claim 1 or 2, **characterized in that** said mounting structure further comprises a handle (60) for controlling the movement of the ladder head (26) about the ladder pivot (32).

4. An agricultural vehicle according to claim 3,
**characterized in that**:
said ladder head (26) has a detent plate (40) affixed thereto;
said mounting structure further comprises a hub (54) which contacts the detent plate (40), whereby the hub (54) controls the movement of the ladder head (26); and
said handle (60) is operationally connected to said hub (54) for controlling the movement of the ladder head (26) about the ladder pivot (32).

5. An agricultural vehicle according to claim 4, **characterized in** said mounting structure further comprises an outer pivot (48) coaxial with the ladder pivot (32) and being affixed to the detent plate (40) and the ladder head (26).

6. An agricultural vehicle according to claim 4 or 5, **characterized in that**:
said detent plate has at least one notch (41); and
said mounting structure further comprises a breakaway mechanism comprising a breakaway housing (50) affixed to the pivot means (30), a rod (51) carrying said hub (54) and a spring (52) for biasing said rod (51) for holding said hub in slideable contact with the notch (41) and allowing the ladder head (26) to rotate about the ladder pivot (32) when sufficient force (78) is exerted on the ladder (25).

7. An agricultural vehicle according to claim 6, **characterized in that** the rod (51) moves in a vertical direction within the breakaway housing (50).

8. An agricultural vehicle according to claim 6 or 7, **characterized in that** said handle (60) is rotationally attached to the frame (21) and has a handle lever (61) for contacting a housing lever (65), which is in contact with the rod (51), such that rotating the handle (60) controls the motion of the rod (51), allowing the ladder head (26) to rotate about the ladder pivot (32).

9. An agricultural vehicle according to claim 8, **characterized in that** the breakaway housing (50) further comprises a slot (53) through which the housing lever (65) is inserted, whereby the housing lever (65) can pivot about the slot (53) for controlling the motion of the rod (51), allowing the ladder head (26) to rotate about the ladder pivot (32).

10. An agricultural vehicle according to claim 8 or 9, **characterized in that** said handle lever (61) comprises a gusset (62) and a detent end (64), which is positioned beneath and in slideable contact with the housing lever (65).

11. An agricultural vehicle according to any of the claims 6 to 10, **characterized in that** the rod (51) has a clip (55) for biasing the spring (52) and the breakaway housing (50) further comprises a clip aperture (56) therein enabling insertion of said clip.

12. An agricultural vehicle according to any of the claims 6 to 11, **characterized in that** the detent plate (40) has a horizontal notch (42), an intermediate notch (43) and a vertical notch (45).

13. An agricultural vehicle according to claim 12,
**characterized in that** the vertical notch (45) comprises a wall (46) which is sloped with respect to a line (47) parallel to the rod (51) while the hub (54) is in contact with said vertical notch (45).

14. An agricultural vehicle according to claim 12 or 13, **characterized in that** the vertical notch (45) is narrower than the hub (54).

15. An agricultural vehicle according to any of the claims 12 to 14, **characterized in that** the horizontal notch (42) and the intermediate notch (43) are identical and have a straight wall (44) which is parallel to a line (47) parallel to the rod (51) while the hub (54) is in contact with the respective notch (42, 43).

16. An agricultural vehicle according to any of the claims 3 to 15, **characterized in that** said handle lever (61) further is operable to control the movement of the ladder head (25) about the transport pivot (31).

17. An agricultural vehicle according to claim 16, when appended to claim 8, **characterized in that** said handle lever further comprises a bolt end (63)

18. An agricultural vehicle according to claim 17, **characterized in that** the bolt end (63) is in slideable contact with a bolt adjustment means (38), said bolt adjustment means having a bolt (36) in adjustable contact with a transport plate (35) which controls the rotation about the transport pivot (31), whereby the ladder head (26) is moved into a transport position.

19. An agricultural vehicle according to any of the preceding claims, **characterized in that** the ladder has a ladder channel (27) with a plurality of steps (28).

## Patentansprüche

1. Landwirtschaftliches Fahrzeug, mit:
einem Deck (15), das einen Deckrahmen (21) aufweist,
einer Leiter (25) zur Ermöglichung eines Zuganges an das Deck (15), wenn sie sich in ihrer vertikalen Stellung befindet, wobei die Leiter (25) einen Leiterkopf (26) an ihrem oberen Ende aufweist,
einer Befestigungsstruktur zum Anbringen des Leiterkopfes (26) an dem Rahmen (21), wobei die Befestigungsstruktur eine Schwenkgelenkeinrichtung (30) aufweist, die ein Leiter-Schwenkgelenk (32) einschließt, das schwenkbar an dem Leiterkopf (26) angebracht ist, um ein Verschwenken der Leiter (25) um eine im wesentlichen horizontale Achse zu ermöglichen,
**dadurch gekennzeichnet, daß** die Schwenkgelenkeinrichtung (30) weiterhin ein Transport-Schwenkgelenk (31) einschließt, das schwenkbar an dem Rahmen (21) befestigt ist, um ein Verschwenken der Leiter (25) um eine im wesentlichen vertikale Achse zu ermöglichen.

2. Landwirtschaftliches Fahrzeug nach Anspruch 1, **dadurch gekennzeichnet, daß** das Transport-Schwenkgelenk (31) und das Leiter-Schwenkgelenk (32) zu einem einzigen Schwenkgelenk-Element (30) vereinigt sind.

3. Landwirtschaftliches Fahrzeug nach Anspruch 1 oder 2, **dadurch gekennzeichnet, daß** die Befestigungskontruktion weiterhin einen Handgriff (60) zur Steuerung der Bewegung des Leiterkopfes (26) um das Leiter-Schwenkgelenk (32) herum umfaßt.

4. Landwirtschaftliches Fahrzeug nach Anspruch 3, **dadurch gekennzeichnet, daß**:
der Leiterkopf (26) eine daran angebrachte Rastplatte (40) aufweist,
die Befestigungsstruktur weiterhin eine Nabe (54) umfaßt, die mit der Rastplatte (40) in Berührung steht, wodurch die Nabe (54) die Bewegung des Leiterkopfes (26) steuert, und
der Handgriff (60) betriebsmäßig mit der Nabe (54) verbunden ist, um die Bewegung des Leiterkopfes (26) um das Leiter-Schwenkgelenk (32) zu steuern.

5. Landwirtschaftliches Fahrzeug nach Anspruch 4, **dadurch gekennzeichnet, daß** die Befestigungsstruktur weiterhin ein äußeres Schwenkgelenk (48) koaxial zu dem Leiter-Schwenkgelenk (32) umfaßt, das an der Rastplatte (40) und dem Leiterkopf (26) befestigt ist.

6. Landwirtschaftliches Fahrzeug nach Anspruch 4 oder 5, **dadurch gekennzeichnet, daß**:
die Rastplatte zumindest eine Kerbe (41) aufweist, und
die Befestigungskonstruktion weiterhin einen Auslösemechanismus umfaßt, der ein Auslösegehäuse (50), das an der Schwenkgelenkeinrichtung (30) befestigt ist, eine Stange (51), die die Nabe (54) trägt, und eine Feder (52) zum Vorspannen der Stange (51) umfaßt, um die Nabe in Gleitberührung mit der Kerbe (41) zu haltern und es dem Leiterkopf (26) zu ermöglichen, sich um das Leiter-Schwenkgelenk (32) zu drehen, wenn eine ausreichende Kraft (78) auf die Leiter (25) ausgeübt wird.

7. Landwirtschaftliches Fahrzeug nach Anspruch 6, **dadurch gekennzeichnet, daß** sich die Stange (51) in einer vertikalen Richtung im Inneren des Auslösegehäuses (50) bewegt.

8. Landwirtschaftliches Fahrzeug nach Anspruch 6 oder 7, **dadurch gekennzeichnet, daß** der Handgriff (60) drehbar an dem Rahmen (21) befestigt ist, und einen Handgriff-Hebel (61) zum Kontakt mit einem Gehäuse-Hebel (65) aufweist, der mit der Stange (51) in Berührung steht, derart, daß eine Drehung des Handgriffes (60) die Bewegung der Stange (51) steuert, was es dem Leiterkopf (26) ermöglicht, sich um das Leiter-Schwenkgelenk (32) zu drehen.

9. Landwirtschaftliches Fahrzeug nach Anspruch 8, **dadurch gekennzeichnet, daß** das Auslösegehäuse (50) weiterhin einen Schlitz (53) umfaßt, durch den hindurch der Gehäuse-Hebel (65) eingesetzt ist, so daß der Gehäuse-Hebel (65) sich um den Schlitz (53) verschwenken kann, um die Bewegung der Stange (51) zu steuern, was es dem Leiterkopf (26) ermöglicht, sich um das Leiter-Schwenkgelenk (32) zu drehen.

10. Landwirtschaftliches Fahrzeug nach Anspruch 8 oder 9, **dadurch gekennzeichnet, daß** der Handgriff-Hebel (61) ein Knotenblech (62) und ein Rastende (64) umfaßt, das unterhalb und in gleitender Berührung mit dem Gehäuse-Hebel (65) angeordnet ist.

11. Landwirtschaftliches Fahrzeug nach einem der Ansprüche 6-10, **dadurch gekennzeichnet, daß** die Stange (51) eine Klammer (55) zum Vorspannen der Feder (52) aufweist, und daß das Auslösegehäuse (50) weiterhin eine darin ausgebildete Klammeröffnung (56) umfaßt, die das Einsetzen der Klammer ermöglicht.

12. Landwirtschaftliches Fahrzeug nach einem der Ansprüche 6-11, **dadurch gekennzeichnet, daß** die Rastplatte (40) eine horizontale Kerbe (42), eine zwischenliegende Kerbe (43) und eine vertikale Kerbe (45) aufweist.

13. Landwirtschaftliches Fahrzeug nach Anspruch 12, **dadurch gekennzeichnet, daß** die vertikale Kerbe (45) eine Wand (46) aufweist, die bezüglich einer Linie (47) geneigt ist, die parallel zur Stange (51) ist, wenn die Nabe (54) in Kontakt mit der vertikalen Kerbe (45) steht.

14. Landwirtschaftliches Fahrzeug nach Anspruch 12 oder 13, **dadurch gekennzeichnet, daß** die vertikale Kerbe (45) schmaler als die Nabe (54) ist.

15. Landwirtschaftliches Fahrzeug nach einem der Ansprüche 12-14, **dadurch gekennzeichnet, daß** die horizontale Kerbe (42) und die zwischenliegende Kerbe (43) identisch sind und eine gerade Wand (44) aufweisen, die parallel zu einer Linie (47) ist, die parallel zu der Stange (51) ist, während sich die Nabe (54) in Kontakt mit der jeweiligen Kerbe (42, 43) befindet.

16. Landwirtschaftliches Fahrzeug nach einem der Ansprüche 3-15, **dadurch gekennzeichnet, daß** der Handgriff-Hebel (61) weiterhin betätigbar ist, um die Bewegung des Leiterkopfes (25) um das Transport-Schwenkgelenk (31) zu steuern.

17. Landwirtschaftliches Fahrzeug nach Anspruch 16 unter Rückbeziehung auf Anspruch 8, **dadurch gekennzeichnet, daß** der Handgriff-Hebel weiterhin ein Bolzenende (63) aufweist.

18. Landwirtschaftliches Fahrzeug nach Anspruch 17, **dadurch gekennzeichnet, daß** das Bolzenende (63) in Gleitkontakt mit einer Bolzeneinstelleinrichtung (38) steht, daß die Bolzeneinstelleinrichtung einen Bolzen (36) in einstellbarem Kontakt mit einer Transportplatte (35) aufweist, der die Drehung des Transport-Schwenkgelenkes (31) steuert, wodurch der Leiterkopf (26) auf eine Transportstellung bewegt wird.

19. Landwirtschaftliches Fahrzeug nach einem der vorhergehenden Ansprüche, **dadurch gekennzeichnet, daß** die Leiter einen Leiterkanal (27) mit einer Vielzahl von Stufen (28) aufweist.

## Revendications

1. Selon l'invention est proposé un véhicule agricole comprenant:
un plancher (15), doté d'un châssis de plancher (21);
une échelle (25) permettant un accès au plancher (15) lorsqu'elle se trouve en position verticale, ladite échelle (25) possédant une tête d'échelle (26) à son extrémité supérieure;
une structure de montage destinée à attacher ladite tête d'échelle (26) audit châssis (21), ladite structure de montage comprenant un moyen de pivot (30) comprenant un pivot d'échelle (32) fixé rotativement à ladite tête d'échelle (26) afin de permettre le pivotement de ladite échelle (25) autour d'un axe substantiellement horizontal,
**caractérisée en ce que** ledit moyen de pivot (30) comprend en outre un pivot de transport (31) fixé rotativement audit châssis (21) afin de permettre un pivotement de ladite échelle 25) autour d'un axe substantiellement vertical.

2. Véhicule agricole selon la revendication 1, **caractérisé en ce que** ledit pivot de transport (31) et ledit pivot d'échelle (32) sont incorporés dans un organe unique de pivot (30).

3. Véhicule agricole selon la revendication 1 ou 2, **caractérisé en ce que** ladite structure de montage comprend en outre une poignée (60) destinée à contrôler le mouvement de la tête d'échelle (26) autour dudit pivot d'échelle (32).

4. Véhicule agricole selon la revendication 3,
**caractérisé en ce que**:
ladite tête d'échelle (26) possède une plaque de positionnement (40) qui lui est fixée;
ladite structure de montage comprend en outre un tourillon (54) qui entre en contact avec la plaque de positionnement (40), de sorte que le tourillon (54) contrôle le mouvement de la tête d'échelle (26); et
ladite poignée (60) est fonctionnellement reliée audit tourillon (54) pour contrôler le mouvement de la tête d'échelle (26) autour du pivot d'échelle (32).

5. Véhicule agricole selon la revendication 4, **caractérisé en ce que** ladite structure de montage comprend en outre un pivot extérieur (48) coaxial avec le pivot d'échelle (32) et fixé à la plaque de positionnement (40) et à la tête d'échelle (26).

6. Véhicule agricole selon la revendication 4 ou 5, **caractérisé en ce que**:
ladite plaque de positionnement possède au moins une encoche (41); et
ladite structure de montage comprend en outre un mécanisme de dégagement comprenant un logement de dégagement (50) fixé au moyen de pivot (30), une tige (51) portant ledit tourillon (54) et un ressort (52) destiné à contraindre ladite tige (51) pour maintenir ledit tourillon en contact glissant avec l'encoche (41) et permettant à la tête d'échelle (26) de tourner autour du pivot d'échelle (32) lorsqu'une force suffisante (78) est exercée sur l'échelle (25).

7. Véhicule agricole selon la revendication 6, **caractérisé en ce que** la tige (51) se déplace verticalement à l'intérieur du logement de dégagement (50).

8. Véhicule agricole selon la revendication 6 ou 7, **caractérisé en ce que** ladite poignée (60) est attachée rotativement au châssis (21) et possède un levier de poignée (61) destiné à entrer en contact avec un levier de logement (65), qui est en contact avec la tige (51), de sorte que la rotation de la poignée (60) contrôle le mouvement de la tige (51), permettant à la tête d'échelle (26) de tourner autour du pivot d'échelle (32).

9. Véhicule agricole selon la revendication 8, **caractérisé en ce que** le logement de dégagement (50) comprend en outre une rainure (53) au travers de laquelle le levier de logement (65) est inséré, de sorte que le levier de logement (65) puisse pivoter autour de la rainure (53) pour contrôler le mouvement de la tige (51), en permettant à la tête d'échelle (26) de tourner autour du pivot d'échelle (32).

10. Véhicule agricole selon la revendication 8 ou 9, **caractérisé en ce que** ledit levier de poignée (61) comprend un gousset (62) et une extrémité de positionnement (64) située sous le levier de logement (65) et en contact glissant avec lui.

11. Véhicule agricole selon l'une quelconque des revendications 6 à 10, **caractérisé en ce que** la tige (51) possède un collet (55) pour contraindre le ressort (52), et le logement de dégagement (50) comprend en outre en son sein une ouverture de collet (56) permettant l'insertion dudit collet.

12. Véhicule agricole selon l'une quelconque des revendications 6 à 11, **caractérisé en ce que** la plaque de positionnement (40) possède une encoche horizontale (42), une encoche intermédiaire (43) et une encoche verticale (45).

13. Véhicule agricole selon la revendication 12, **caractérisé en ce que** l'encoche verticale (45) comprend une paroi (46) inclinée par rapport à une ligne (47) parallèle à la tige (51) lorsque le tourillon (54) est en contact avec ladite encoche verticale (45).

14. Véhicule agricole selon la revendication 12 ou 13, **caractérisé en ce que** l'encoche verticale (45) est plus étroite que le tourillon (54).

15. Véhicule agricole selon l'une quelconque des revendications 12 à 14, **caractérisé en ce que** l'encoche horizontale (42) et l'encoche intermédiaire (43) sont identiques et possèdent une paroi rectiligne (44) parallèle à la tige (51) lorsque le tourillon (54) est en contact avec l'encoche respective (42, 43).

16. Véhicule agricole selon l'une quelconque des revendications 3 à 15, **caractérisé en ce que** ledit levier de poignée (61) est en outre à même de contrôler le mouvement de la tête d'échelle (25) autour du pivot de transport (31).

17. Véhicule agricole selon la revendication 16, lorsqu'elle se rapporte à la revendication 8, **caractérisé en ce que** ledit levier de poignée comprend en outre une extrémité de verrou (63)

18. Véhicule agricole selon la revendication 17, **caractérisé en ce que** l'extrémité de verrou (63) est en contact glissant avec un moyen d'ajustement de verrou (38), ledit moyen d'ajustement de verrou possédant un verrou (36) en contact réglable avec une plaque de transport (35) contrôlant la rotation autour du pivot de transport (31), de sorte que la tête d'échelle puisse être déplacée dans sa position de transport.

19. Véhicule agricole selon l'une quelconque des revendications précédentes, **caractérisé en ce que** l'échelle possède un canal d'échelle (27) muni d'une pluralité d'échelons (28).
